# EUROPÄISCHE PATENTANMELDUNG

(11) **EP 3 933 021 A1**
(43) Veröffentlichungstag der Anmeldung: **05.01.2022**
(21) Anmeldenummer: 21176872.6
(22) Anmeldetag: 31.05.2021
(51) Int. Cl.: C12C 11/11, C12C 12/00, C12H 1/044

(54) **VERFAHREN ZUM BEHANDELN EINES BIERES, VERFAHREN ZUM HERSTELLEN EINES GLUTENFREIEN BIERES, BIER UND ENTSPRECHENDE VERWENDUNG**

(30) Priorität: 30.06.2020 DE 102020117175
(71) Anmelder: Krombacher Brauerei Bernhard Schadeberg GmbH & Co. KG, 57223 Kreuztal (DE)
(72) Erfinder: Hense, Ludger, 57223 Kreuztal (DE); Thünemann, Maria, 57223 Kreuztal (DE); ter Steege, Marcel, 57223 Kreuztal (DE); Stenmans, Michael, 57223 Kreuztal (DE); Schmidt, Manfred, 57223 Kreuztal (DE)
(74) Vertreter: Kuhnen & Wacker Patent- und Rechtsanwaltsbüro PartG mbB

(57) **Zusammenfassung**

Es wird ein Verfahren zum Behandeln eines Bieres vorgeschlagen, welches wenigstens die Schritte aufweist: (a) Zugeben eines ersten Kieselgels zum Bier in einer Dosage von 55 bis 95 g Trockenmasse Kieselgel/hl Bier, wobei das Bier einen Gehalt an Gluten von wenigstens 80 mg/kg aufweist; (b) Abtrennen des ersten Kieselgels aus dem Bier; (c) nach dem Abtrennen des ersten Kieselgels aus dem Bier, Zugeben eines zweiten Kieselgels zum Bier in einer Dosage von 20 bis 65 g Trockenmasse Kieselgel/hl Bier; und (d) Abtrennen des zweiten Kieselgels aus dem Bier. Ferner werden ein Verfahren zum Herstellen eines glutenfreien Bieres, ein glutenfreies Bier und eine Verwendung von Kieselgel zum Einstellen des Glutengehalts eines Bieres vorgeschlagen.

## Beschreibung

### Technisches Gebiet der Anmeldung

Die vorliegende Erfindung betrifft ein Verfahren zum Behandeln eines Bieres nach Anspruch 1, ein Verfahren zum Herstellen eines glutenfreien Bieres nach Anspruch 8, ein glutenfreies Bier nach Anspruch 9 und eine Verwendung von Kieselgel zum Einstellen des Glutengehalts eines Bieres nach Anspruch 10.

### Stand der Technik

Dem Fachmann sind aus dem Stand der Technik verschiedene Verfahren zur Herstellung glutenreduzierter oder glutenfreier Biere bekannt. So können einerseits glutenfreie Rohstoffe zur Herstellung eines glutenfreien Bieres verwendet werden.

Alternativ zur Wahl glutenfreier Rohstoffe sind auch Verfahren bekannt, bei denen glutenhaltige Rohstoffe eingesetzt werden, um eine Würze oder ein Bier zu erzeugen, welche Gluten in relativ hohen Gehalten von beispielsweise über 100 mg/kg enthalten, und den Glutengehalt jeweils durch eine Behandlung des Bieres oder einer Vorstufe desselben zu senken.

So ist aus der Gebrauchsmusterschrift DE 20 2009 005 129 U1 beispielsweise die Erzeugung eines Bieres aus Gerstenmalzextrakt bekannt, wobei bei der Herstellung des Gerstenmalzextrakts die Eiweiße, und damit auch die Glutenbestandteile, restlos entfernt werden.

Ferner ist aus den Veröffentlichungen US 9,260,680 B2 und WO 2008/090 126 A1 der Einsatz von Enzymen, insbesondere quervernetzender Enzyme, wie Transglutaminase, bekannt, bei dem beispielsweise Prolamin vernetzt wird, um ein modifiziertes Prolamin zu erhalten, welches aus der Würze oder dem Bier entfernt werden kann.

In der Veröffentlichung WO 2008/090 126 A1 ist zur Abtrennung der quervernetzten Prolamine ein Filtrations- oder Zentrifugationsschritt vorgesehen. Als besonders geeignet hat sich zur Entfernung von modifizierten Prolaminfragmenten eine Filtration mittels eines amorphen Siliciumdioxids, wie Kieselgur, erwiesen, d.h., eine Adsorption an Kieselgur.

Abgesehen davon, dass nicht alle bekannten Verfahren zur Herstellung glutenfreier Biere konform mit dem Deutschen Reinheitsgebot sind, treten erfahrungsgemäß bei den bisher bekannten Verfahren zur nachträglichen Entfernung von Gluten aus Bier oder einer seiner Vorstufen erhebliche Schwankungen hinsichtlich des Glutengehalts im resultierenden Bier auf. Somit besteht weiterer Bedarf für ein Verfahren, mit dem sich der Glutengehalt eines Bieres, insbesondere eines herkömmlichen, auf Gerstenmalz-Basis hergestellten Bieres, auf einen Gehalt von < 20 mg/kg, vorzugsweise < 15 mg/kg, insbesondere < 10 mg/kg, zuverlässig, d.h. reproduzierbar, einstellen lässt. Zudem sind bei den bisherigen Herstellungsverfahren für glutenfreier Bier oft Einbußen bezüglich der Qualität des resultierenden Bieres, insbesondere des Biergeschmacks und -aromas, oder andere Nachteile aufgetreten.

### Aufgabe der Erfindung

Aufgabe der vorliegenden Erfindung ist folglich, ein verbessertes Verfahren, d.h., ein verbessertes Behandlung- oder Herstellungsverfahren, bereitzustellen, mit dem sich der Glutengehalt eines Bieres, insbesondere eines auf Gerstenmalz-Basis hergestellten Bieres, auf einen Gehalt von < 20 mg/kg, vorzugsweise < 15 mg/kg, insbesondere < 10 mg/kg, reproduzierbar einstellen lässt. Ferner ist es eine Aufgabe der vorliegenden Anmeldung, ein mit dem verbesserten Verfahren hergestelltes Bier bereitzustellen.

### Definitionen

Im Rahmen der vorliegenden Erfindung wird unter "Gerstenmalz" ein vermälztes Getreide verstanden, wobei der Massenanteil der Gerste am Getreide bei der Herstellung des Malzes wenigstens 90 %, vorzugsweise wenigstens 95 %, weiter bevorzugt wenigstens 99 %, insbesondere 100 %, betrug. Erfindungsgemäß kann die Herstellung des Bieres auf das Gerstenmalz als einzige Kohlenhydratquelle beschränkt sein.

Im Rahmen der vorliegenden Erfindung umfasst der Begriff "Gluten" alle Stoffe, die mittels des Meßverfahrens R5-Competitive-ELISA für Bier gemäß AOECS-Standards vom September 2016 als Gluten erfasst werden. In der vorliegenden Anmeldung wurden alle Glutengehalte mittels dieses Meßverfahrens bestimmt.

Im Rahmen der vorliegenden Erfindung wird unter "glutenfrei" in Bezug auf ein Material verstanden, dass dieses Material einen Gehalt an Gluten von 0 bis unter 20 mg/kg des Materials aufweist.

Im Rahmen der vorliegenden Erfindung wird unter "glutenhaltig" in Bezug auf ein Material verstanden, dass dieses Material einen Gehalt an Gluten von 20 mg/kg des Materials oder mehr, vorzugsweise 80 bis 200 mg/kg des Materials, aufweist.

Erfindungsgemäß schließt der Begriff "Bier" ein Vollbier, ein Schankbier, ein Leichtbier, ein alkoholfreies Bier und Mischgetränke enthaltend eines der vorstehend genannten Biere, wie beispielsweise Radler, ein. Dabei wird erfindungsgemäß unter "Bier" vorzugsweise ein Bier verstanden, das sich im Lagertank befindet oder weiter bevorzugt bereits aus dem Lagertank abgezogen, aber noch nicht in die Verkaufsgebinde abgefüllt wurde.

Im Rahmen der vorliegenden Erfindung ist der Begriff "Kieselgel" nicht auf die dem Fachmann geläufige übliche Definition betreffend kolloidale Kieselsäuren bzw. Polykieselsäure beschränkt (vgl. bspw. Römpp-Lexikon Chemie, Stichwort "Kieselgele", 10. Auflage, Georg Thieme Verlag, 1997, Seite 2150), sondern schließt auch ausdrücklich die Formen Hydrogel, Xerogel, hydratisiertes Xerogel und beliebige Gemische derselben ein (vgl. auch G. Annemüller, H.-J. Manger: "Klärung und Stabilisierung des Bieres", Kapitel 15.4, insbesondere 15.4.2, Verlag der VLB Berlin, 1. Auflage, 2011, Seiten 544 bis 557). Xerogele weisen typischerweise Trockenmassegehalte zwischen 89 und 99 %, im Mittelwert etwa 90 bis 95 % auf. Hydrogele weisen Trockenmassegehalte zwischen 33 und 54 %, im Mittelwert etwa 35 bis 38 % auf. Hydratisierte Xerogele weisen typischerweise Trockenmassegehalte zwischen 55 und 70 %, im Mittelwert etwa 60 bis 65 % auf. In den vorliegenden Anmeldeunterlagen bedeutet die Angabe einer Dosagemenge von X g/hl eine Zugabe von X g Kieselgel (bezogen bzw. berechnet auf die Trockenmasse des Kieselgels) pro 1 hl Bier. D.h., in der vorliegenden Anmeldung beziehen sich alle Kieselgelmengen bzw. -dosagen auf deren Trockenmasse, obgleich die konkret eingesetzten bzw. zugegebenen Kieselgele jeweils einen bestimmten Wassergehalt aufweisen. Erfindungsgemäß umfasst der Begriff "Kieselgel" nicht "Kieselgur". Folglich enthält das erfindungsgemäß mit "Kieselgel" bezeichnete Substrat keine Kieselgur. Der Trockenmasseanteil der Kieselgele kann beispielsweise gemäß MEBAK Brautechnische Analysenmethoden, Band IV, 2. Auflage, 1998, Kapitel 1.1.2.1 bestimmt werden. Alle in dieser Anmeldung vorgenommenen Bestimmungen des Trockenmasse- bzw. Wasseranteils wurden mit der vorstehend genannten Methode ermittelt.

Unter dem Begriff "Abtrennen" eines Kieselgels aus einem Bier wird erfindungsgemäß das Entfernen des Kieselgels aus dem Bier zu einem Anteil von wenigstens 98 Massenprozent, vorzugsweise wenigstens 99 Massenprozent, insbesondere 100 Massenprozent, des vor der Abtrennung im Bier enthaltenen Kieselgels (jeweils bezogen auf die Kieselgel-Trockenmasse), verstanden. Analoges gilt für den Begriff "Abtrennen" in Zusammenhang mit dem Abtrennen eines Filterhilfsmittels oder Stabilisierungsmittels aus dem Bier.

### Zusammenfassung der Erfindung

Dem Fachmann ist der Einsatz von Kieselgur als Filtrationshilfsmittel zur Klärung von Bier bekannt. Mit den hierbei verwendeten, üblichen oder auch deutlich erhöhten Kieselgurmengen lässt sich jedoch nach Erkenntnis der Erfinder eine wirksame Verringerung des Glutengehalts im Bier nicht erzielen.

Die Erfinder der vorliegenden Anmeldung haben dagegen festgestellt, dass sich der Einsatz von Kieselgel grundsätzlich zur Entfernung von Gluten aus Bier oder Bier enthaltenden Getränken eignet. Allerdings ist zu einer wirksamen Entfernung des Glutens aus dem Bier oder einer seiner Vorstufen eine zur herkömmlichen Stabilisierung des Bieres übliche Dosagemenge nicht ausreichend. In den Untersuchungen der Erfinder betreffend eine mit der Kieselgurfiltration kombinierte Kieselgel-Behandlung des Bieres zur Glutenentfemung führte auch eine erhöhte Dosagemenge des Kieselgels aus den folgenden Gründen nicht zum erwünschten Erfolg: So wurde einerseits festgestellt, dass sich mit steigender Zugabemenge zwar die im resultierenden Bier verbleibende Glutenkonzentration weiter absenken lässt. Jedoch sinkt die mit jeder Erhöhung der Zugabemenge entfernbare Glutenmenge immer weiter ab, sodass mit steigender Zugabemenge die Effizienz der Glutenentfernung immer weiter sinkt. Darüber hinaus haben die Erfinder beobachtet, dass sich innerhalb eines Filtrationsbatches trotz gleichbleibender Kieselgeldosage die zu Filtrationsbeginn geringe Glutenkonzentration im behandelten Bier ansteigt, was die Erfinder auf Rücklöseeffekte des Glutens aus dem Filter als mögliche Ursache zurückführen. Diese Beobachtung wurde auch dadurch bestätigt, dass auch ein mehrmaliges "Imkreisfahren" des Bieres durch den Filter nicht zu einer weiteren Absenkung der Glutenkonzentration im Bier führte. Aus den Voruntersuchungen konnte geschlossen werden, dass der Einsatz selbst sehr hoher Kieselgeldosagen (weit über 100 g/hl, z.B., 120 bis 150 g/hl) nicht sicher bzw. zuverlässig zu einer hinreichenden Entfernung des Glutens im resultierenden Bier führte, um ein Bier herzustellen, das reproduzierbar glutenfrei ist, d.h., weniger als 20 mg/kg Gluten enthält. Darüber hinaus tritt bei sehr hohen Kieselgeldosagen oftmals ein vorzeitiges Blockieren bzw. Zusetzen des Filters auf, was eine effiziente Bierbehandlung im praktischen Betrieb unmöglich macht.

Überraschenderweise haben die Erfinder der vorliegenden Anmeldung jedoch festgestellt, dass es durch eine wenigstens zweistufige (zwei-, drei- oder vierstufige) Zugabe und Abtrennung von Kieselgel unter Beachtung vorgegebener Dosagemengen möglich ist, reproduzierbar und effizient glutenfreies Bier, welches auf Basis eines glutenhaltigen Rohstoffs, vorzugsweise Gerstenmalz, hergestellt worden ist, zu erzeugen. Erfindungsgemäß wird dem zu behandelnden, glutenhaltigen Bier Kieselgel zugegeben, um das Gluten mit dem Kieselgel in Kontakt zu bringen. Im nächsten Schritt wird das mit dem Gluten beladene Kieselgel vom Bier beispielsweise durch Filtration oder Separation abgetrennt, wodurch die Glutenkonzentration in Bier bereits erheblich verringert wird. Im nächsten Schritt wird dem Bier erneut Kieselgel in einer vorgegebene Zugabemenge zugegeben, um dadurch das Kieselgel mit dem noch im Bier vorhandenen Gluten in Kontakt zu bringen. Im letzten Schritt wird schließlich auch die zweite Kieselgeldosage aus dem Bier abgetrennt. Bei Bedarf können erfindungsgemäß auch ein dritter und eventuell ein vierter Zugabe- und Abtrennschritt vorgesehen sein, was gerade bei einer hohen Glutenbelastung des Ausgangsbieres vorteilhaft sein kann, in der Praxis jedoch selten erforderlich sein wird.

Auf die vorstehend beschriebene Weise lässt sich ein glutenfreies Bier herstellen, das allenfalls noch geringe Restmengen an Gluten enthält. Dabei haben die Erfinder festgestellt, dass sich durch die wenigstens zweistufige Vorgehensweise die Glutenabtrennung aus den Bier effizienter im Sinne der abgetrennten Glutenmasse pro eingesetzter Kieselgelmasse bewerkstelligen lässt, als wenn dieselbe Kieselgelmasse dem Bier in einer einzigen Dosagemenge zugeführt werden würde. Darüber hinaus waren beim erfindungsgemäßen Verfahren, das wenigstens zwei Kieselgelzugaben vorsieht, auch keine Rücklöseeffekte von Gluten aus dem Filter ins behandelte Bier zu beobachten, welche bei einer einmaligen Kieselgelzugabe ab einem bestimmten Volumendurchsatz bei höheren Bierdurchsätzen beobachtet worden war.

Dabei eignet sich das erfindungsgemäße Verfahren besonders für die Herstellung von Reinheitsgebots-konformen Bieren, welche eine zu den analogen, glutenhaltigen Bieren vergleichbare Qualität, insbesondere Geschmacks- und Geruchsqualität, aufweisen.

Die vorstehend genannte Aufgabe wird daher durch das Verfahren nach Anspruch 1 gelöst. So wird ein Verfahren zum Behandeln eines Bieres vorgeschlagen, welches wenigstens die Schritte aufweist:
(a) Zugeben eines ersten Kieselgels zum Bier in einer Dosage von 55 bis 95 g Trockenmasse Kieselgel/hl Bier, vorzugsweise 65 bis 90 g Trockenmasse Kieselgel/hl Bier, insbesondere 70 bis 85 g Trockenmasse Kieselgel/hl Bier, wobei das Bier einen Gehalt an Gluten von wenigstens 80 mg/kg, vorzugsweise wenigstens 100 mg/kg, aufweist;
(b) Abtrennen des ersten Kieselgels aus dem Bier;
(c) nach dem Abtrennen des ersten Kieselgels aus dem Bier, Zugeben eines zweiten Kieselgels zum Bier in einer Dosage von 20 bis 65 g Trockenmasse Kieselgel/hl Bier, vorzugsweise 25 bis 55 g/hl Bier, insbesondere 30 bis 50 g Trockenmasse Kieselgel/hl Bier; und
(d) Abtrennen des zweiten Kieselgels aus dem Bier.

Wenn beispielsweise von einem untergärigen, unfiltrierten Vollbier, welches unter Verwendung von Gerstenmalz hergestellt worden ist und 100 bis 120 mg/kg Gluten enthält, ausgegangen wird, gelingt es durch das erfindungsgemäße Verfahren, den Glutengehalt in Bier nach der ersten Behandlungsstufe auf etwa 30 bis 50 mg/kg, teilweise sogar unter 30 mg/kg, zu verringern. Durch die erfindungsgemäß vorgesehene zweite Behandlungsstufe kann der Glutengehalt im resultierenden Bier weiter abgesenkt werden, nämlich auf einen Gehalt zwischen 10 und 20 mg/kg. Je nach Ausgangsbier, Wahl des Kieselgels und der entsprechenden Dosagemenge, lassen sich mit dem erfindungsgemäßen Verfahren auch Glutengehalte unterhalb der Nachweisgrenze erzielen. Eine Veränderung oder Beeinträchtigung der Bierqualität im Vergleich zum glutenhaltigen Ausgangsbier konnte nicht festgestellt werden.

So kann insgesamt mithilfe des erfindungsgemäßen Verfahrens ein glutenfreies Bier aus einem glutenhaltigen Ausgangsbier mit einem vertretbaren Materialaufwand und unter Nutzung der in der Brauerei vorhandenen Anlagentechnik hergestellt werden, wobei das erfindungsgemäß behandelte Bier die Konzentrationen Gluten von 20 mg/kg reproduzierbar unterschreitet. Der besondere Vorteil des erfindungsgemäßen Verfahrens liegt auch in der Möglichkeit, bei einem glutenhaltigen "Standardbier", welches beispielsweise aus einem herkömmlichen, großtechnischen Herstellungsverfahren für beispielsweise ein Lager- oder Pilsbier stammt, anzusetzen, und aus diesem mit überschaubarem Aufwand reproduzierbar ein glutenfreies Bier im Sinne der vorliegenden Erfindung herzustellen. Dies hat fertigungstechnisch den gravierenden Vorteil, dass quasi erst im Stadium des fertigen Bieres, also des Bieres im oder nach dem Lagertank, entschieden werden muss, ob das Bier als "Standardbier" mit natürlichem Glutengehalt belassen wird, oder ob es gezielt zu einem glutenfreien Bier weiterverarbeitet werden soll. Dies stellt eine erhebliche Vereinfachung des Produktionsablaufs gegenüber herkömmlichen Verfahren dar, bei denen beispielsweise andere Rohstoffe gewählt werden, Enzyme eingesetzt werden oder bei denen die Maische oder Würze zur Glutenreduzierung behandelt wird. So muss bei diesen herkömmlichen Verfahren bereits im Stadion der Würze, der Maische oder gar schon bei der Rohstoffauswahl, also in einem früheren Verfahrensschritt entschieden werden, ob aus den betreffenden Sud letztlich ein herkömmliches Standardbier oder ein glutenfreies Bier hergestellt werden soll. Nachteilig ist hieran zudem, dass der zur Herstellung des glutenfreien Bieres vorgesehene Sud von vornherein getrennt von den herkömmlichen "Standardsuden" verarbeitet werden muss (Läutern, Kochen, Gären, Reifen, Lagern und schließlich Filtrieren), was den Ablauf in der Brauerei komplizierter (Handling der größeren Vielfalt der Sude), aufwendiger (größere Anzahl an Tanks und Verrohrung sowie höherer Reinigungsaufwand erforderlich) und kostenträchtiger macht. So müssen bei derartigen herkömmlichen Verfahren bereits ab dem Sudhaus Sonderchargen für die Maische/Würze hergestellt werden und diese getrennt von den Standardsuden bis zum fertigen Bier behandelt werden. Zudem lassen sich auf diesem Wege natürliche Schwankungen, die beispielsweise rohstoff- oder jahrgangsbedingt sind, zwischen unterschiedlichen Suden schwieriger ausgleichen, da das sonst übliche Verschneiden mit der Würze oder dem Bier der "Standardsude", wie dies bei den herkömmlichen Verfahren üblich ist, nicht oder nur stark beschränkt möglich ist.

Vorteilhafte Ausführungsformen des erfindungsgemäßen Verfahrens sind Gegenstand der abhängigen Ansprüche.

So kann das erste Kieselgel ein Xerogel, ein Hydrogel, ein hydratisiertes Xerogel oder ein beliebiges Gemisch derselben sein. Alternativ oder zusätzlich kann auch das zweite Kieselgel ein Xerogel, ein Hydrogel, ein hydratisiertes Xerogel oder ein beliebiges Gemisch derselben sein. Das erste Kieselgel und das zweite Kieselgel können dasselbe Kieselgel sein, können jedoch auch verschiedene Kieselgele sein.

Das erste und das zweite Kieselgel des erfindungsgemäßen Verfahrens sind nicht auf bestimmte Kieselgele festgelegt. So hat sich der Einsatz von Xerogel im erfindungsgemäßen Verfahren als vorteilhaft in Bezug auf die Effizienz der Glutenabtrennung erwiesen. Ferner zeichnet sich das Xerogel aufgrund seines geringen Wassergehalts durch eine vergleichsweise geringe und damit kostengünstige Einsatzmenge aus. Wird als das Kieselgel erfindungsgemäß Hydrogel eingesetzt, so weist dieses den Vorteil der besonders geringen Staubbildung bei der Handhabung des Kieselgels auf.

Ferner können für das erste Kieselgel und das zweite Kieselgel zwei unterschiedliche Kieselgele gewählt werden. Hierdurch kann das Verfahren optimal an das zu behandelnde Bier angepasst werden.

Vom erfindungsgemäßen Verfahren ist jedoch auch der Fall umfasst, bei dem als das erste Kieselgel und das zweite Kieselgel dasselbe Kieselgel eingesetzt wird. Hierdurch werden die Handhabung im praktischen Betrieb und die Lagerhaltung vereinfacht.

Ferner kann das Abtrennen des ersten Kieselgels in Schritt (b) und/oder das Abtrennen des zweiten Kieselgels in Schritt (d) mittels eines Separators oder einer Zentrifuge, vorzugsweise mittels eines Feinstklärers, oder mittels Filtration erfolgen.

Die Abtrennung des ersten Kieselgels und/oder des zweiten Kieselgels aus dem Bier kann beispielsweise vorteilhaft mittels eines herkömmlichen Filters, einer Zentrifuge oder eines Separators, wie beispielsweise Kieselgurfilter (Anschwemm-Kerzen- oder - Schichtenfilter) oder Tellerzentrifuge, erfolgen. Dabei hat sich die Abtrennung mittels eines Feinstklärers als besonders wirksam und gleichzeitig schonend für das Bier herausgestellt. Wird beim erfindungsgemäßen Verfahren die Kieselgel-Behandlung von der Kieselgur-Filtration entkoppelt und die Kieselgel-Abtrennung beispielsweise durch eine Zentrifuge oder einen Separator bewerkstelligt, so lassen sich nach der Erkenntnis der Erfinder auch die herkömmlich beobachteten Rücklöseeffekte des Glutens minimieren.

Dem Bier kann vor dem Abtrennen des ersten Kieselgels aus dem Bier in Schritt (b), vorzugsweise beim Zugeben des ersten Kieselgels zum Bier in Schritt (a), ein Filterhilfsmittel, vorzugsweise Kieselgur oder Perlit, zugegeben werden. Das Filterhilfsmittel kann vor dem Zugeben des zweiten Kieselgels zum Bier in Schritt (c) aus dem Bier abgetrennt werden.

Zur Vereinfachung der Durchführung des erfindungsgemäßen Verfahrens kann das Filterhilfsmittel, wie beispielsweise Kieselgur, im gleichen Schritt wie das erfindungsgemäße Kieselgel zum Bier zugegeben werden. Ferner ist die Handhabung besonders einfach und effizient, wenn beide zeitgleich in einem Schritt wieder aus dem Bier abgetrennt werden. Hierdurch kann die Bierfiltration und die erste Stufe der Glutenverringerung vorteilhaft in einer einzigen Stufe durchgeführt werden.

Ferner kann dem Bier nach dem Abtrennen des ersten Kieselgels aus dem Bier in Schritt (b), vorzugsweise beim Zugeben des zweiten Kieselgels zum Bier in Schritt (c), ein Stabilisierungsmittel, vorzugsweise PVPP, zugegeben werden. Dabei kann das Stabilisierungsmittel beim Abtrennen des zweiten Kieselgels in Schritt (d) aus dem Bier abgetrennt werden.

Analog kann zur Vereinfachung der Durchführung des erfindungsgemäßen Verfahrens das Stabilisierungsmittel, wie beispielsweise PVPP oder Bentonit, im gleichen Schritt wie die erfindungsgemäße zweite Kieselgelgabe zum Bier zugegeben werden. Ferner ist die Handhabung besonders einfach, wenn beide zeitgleich in einem Schritt wieder aus dem Bier abgetrennt werden. Hierdurch kann die Trübungsstabilisierung und die zweite Stufe der Glutenverringerung vorteilhaft in einer einzigen Stufe durchgeführt werden.

Beim erfindungsgemäßen Verfahren kann vorgesehen sein, dass bei der Herstellung oder bei der Behandlung des Bieres weder dem Bier noch einer seiner Vorstufen, insbesondere der Maische oder der Würze, ein Enzym zugegeben wird, mit Ausnahme der in den zur Herstellung des Bieres verwendeten Rohstoffen natürlich enthaltenen Enzyme.

Ein weiterer Aspekt des erfindungsgemäßen Verfahrens ist nämlich, dass die Zugabe künstlicher Enzyme während der Behandlung oder der Herstellung des Bieres vollständig unterbleiben kann. Damit ermöglicht das erfindungsgemäße Verfahren die Herstellung von glutenfreien Bieren gemäß dem Deutschen Reinheitsgebot bzw. die reinheitsgebotkonforme Behandlung von Bieren. Andererseits werden durch die Vermeidung der Zugabe künstlicher Enzyme erhöhte Herstellungskosten vermieden.

Im Rahmen des erfindungsgemäßen Verfahrens kann ferner vorgesehen sein, dass das erfindungsgemäß behandelte bzw. hergestellte Bier ausschließlich aus den Rohstoffen Malz, vorzugsweise Gerstenmalz, Wasser und Hopfen, und unter Verwendung von Hefe hergestellt werden worden ist. Dabei schließt Hopfen Doldenhopfen, Hopfenpellets, Hopfenextrakte ein. Ferner kann Hopfen erfindungsgemäß auch sonstige, nach dem Deutschen Reinheitsgebot zugelassene Hopfenprodukte einschließen.

Durch die Beschränkung auf die vorstehend angegebenen Rohstoffe eignet sich das erfindungsgemäße Verfahren für eine Behandlung eines glutenhaltigen Bieres bzw. Herstellung eines glutenfreien Bieres, welches dem Deutschen Reinheitsgebot entspricht.

Die vorstehend genannte Aufgabe wird ferner durch das Herstellungsverfahren gemäß Anspruch 8 gelöst. Darin wird ein Verfahren zum Herstellen eines glutenfreien Bieres beansprucht, welches wenigstens die nachfolgend genannten Schritte aufweist:
(aa) Herstellen eines Bieres unter Verwendung eines glutenhaltigen Rohstoffs, vorzugsweise eines Gerstenmalzes, wobei das Bier einen Gehalt an Gluten von wenigstens 80 mg/kg, vorzugsweise wenigstens 100 mg/kg, aufweist; und
(bb) Behandeln des Bieres nach dem vorstehend beschriebenen Verfahren oder nach dem Verfahren nach einem der Ansprüche 1 bis 7.

Beim erfindungsgemäßen Herstellungsverfahren gelten die vorstehend für das erfindungsgemäße Behandlungsverfahren aufgeführten Vorteile analog. Es ermöglicht die Herstellung glutenfreier Biere, welche Glutengehalte von reproduzierbar unter 20 mg/kg enthalten, aus glutenhaltigen Ausgangsbieren, insbesondere aus untergärigen Vollbieren, welche unter Verwendung von Gerstenmalz hergestellt worden sind. Dies bedeutet, dass durch die Anwendung des erfindungsgemäßen Verfahrens auch bei den bei der Bierherstellung üblichen rohstoff- oder chargenbedingten Schwankungen immer ein glutenfreies Bier im Sinne der vorliegenden Erfindung erzeugt werden kann.

Besonders vorteilhaft beim erfindungsgemäßen Behandlung- bzw. Herstellungsverfahren ist, dass ein nach herkömmlichen Verfahren und unter Verwendung herkömmlicher Rohstoffe hergestelltes Bier, insbesondere ein aus der regulären Produktion stammendes Bier zur Herstellung des glutenfreien Bieres eingesetzt werden kann. Hierdurch kann einerseits das für das glutenhaltige Standardprodukt verwendete Rezeptur, die Rohstoffe, das Brauverfahren und die vorhandene Anlagentechnik analog zum bewährten Standardprodukt eingesetzt werden. Damit ist es nicht erforderlich, eine neue Rezeptur, beispielsweise unter Verwendung neuer Rohstoffe, zu entwickeln oder die in der Brauerei bereits vorhandenen Standardabläufe wesentlich zu verändern. Andererseits ist zur Verwirklichung des erfindungsgemäßen Verfahrens kein relevantes Investment erforderlich, es genügen minimale anlagen- und verfahrenstechnische Anpassungen.

Die vorliegende Erfindung umfasst ferner das durch das erfindungsgemäße Behandlungs- oder Herstellungsverfahren hergestellte, glutenfreie Bier. Dabei weist das erfindungsgemäße Bier einen Gehalt an Gluten von < 20 mg/kg, vorzugsweise < 15 mg/kg, insbesondere < 10 mg/kg, auf. Neben dem geringen Glutengehalt erweist sich das erfindungsgemäße Bier dahingehend als besonders vorteilhaft, dass es sich geschmacklich nicht signifikant von den entsprechenden, glutenhaltigen Ausgangsbier unterscheidet. Die Erfinder waren davon überrascht, dass sich mittels des erfindungsgemäßen Verfahrens ein glutenfreies Bier herstellen lässt, welches sich geschmacklich und geruchlich nicht von dem entsprechenden, glutenhaltigen Vergleichsbier unterscheiden lässt. Hierdurch wird die Verbrauchererwartung an ein glutenfreies Bier wesentlich besser erfüllt im Gegensatz zu glutenfreien Bieren auf Basis von beispielsweise einer veränderten Rohstoffrezeptur (Verwendung glutenfreier Rohstoffe), welche durch signifikante Geschmacks- und Aromaeinbußen gekennzeichnet sind.

Ohne an eine Theorie gebunden sein zu wollen, führen die Erfinder die hohe Ähnlichkeit des erfindungsgemäßen glutenfreien Bieres mit dem glutenhaltigen Ausgangsbier auf die Ähnlichkeit der Proteinstruktur der beiden Biere zurück.

Die vorstehend genannte Aufgabe wird ferner durch die Verwendung gemäß Anspruch 10 gelöst. So wird eine Verwendung von Kieselgel zum Einstellen des Glutengehalts eines Bieres auf < 20 mg/kg, vorzugsweise < 15 mg/kg, insbesondere < 10 mg/kg, beansprucht, wobei Kieselgel in wenigstens zwei nacheinander erfolgenden Stufen verwendet wird, wobei in jeder Stufe dem Bier Kieselgel zugegeben und aus dem Bier abgetrennt wird.

Bei der erfindungsgemäßen Verwendung gelten die vorstehend für die erfindungsgemäßen Verfahren und das erfindungsgemäße Bier aufgeführten Merkmale und Vorteile analog.

So ist erfindungsgemäß erstmals vorgesehen, Kieselgel zur Verringerung des Glutengehaltes in einem Bier durch ein wenigstens zweistufiges Verfahren mit einer wenigstens zweimaligen Zugabe von Kieselgel zum Bier und jeweiliger Abtrennung des Kieselgels aus dem Bier vor der nächsten Zugabe einzusetzen.

In einer besonders vorteilhaften Ausführungsform der erfindungsgemäßen Verwendung wird dem glutenhaltigen Bier ein erstes Kieselgel zugegeben, vorzugsweise in einer Dosage von 55 bis 95 g Trockenmasse Kieselgel/hl Bier, weiter bevorzugt 65 bis 90 g Trockenmasse Kieselgel/hl Bier, insbesondere 70 bis 85 g Trockenmasse Kieselgel/hl Bier, und danach das erste Kieselgel aus dem Bier abgetrennt. Danach wird ein zweites Kieselgel dem Bier zugegeben, vorzugsweise in einer Dosage von 20 bis 65 g Trockenmasse Kieselgel/hl Bier, weiter bevorzugt 25 bis 55 g Trockenmasse Kieselgel/hl Bier, insbesondere 30 bis 50 g Trockenmasse Kieselgel/hl Bier, und danach das zweite Kieselgel aus dem Bier abgetrennt.

### Weitere Offenbarung der Erfindung

Erfindungsgemäß erfolgt die Anwendung des Kieselgels im Absetzverfahren oder vorzugsweise in Kontaktverfahren bzw. Durchlaufkontaktverfahren, insbesondere in Verbindung mit der Kieselgurfiltration und/oder der Eiweißstabilisierung, wobei Kontaktzeiten zum Bier von wenigen Minuten (beispielsweise 0,5 bis 15 Minuten, vorzugsweise 1 bis 10 Minuten, insbesondere 2 bis 5 Minuten) ausreichen, um eine hinreichende Absorption des Glutens an das Kieselgel zu erzielen. Beim erfindungsgemäßen Verfahren und/oder bei der erfindungsgemäßen Verwendung kann die Kontaktzeit, d.h., die Zeit zwischen der Zugabe des Kieselgels zum Bier und dem Abtrennen dieses Kieselgel aus dem Bier, 0,5 bis 15 Minuten, vorzugsweise 1 bis 10 Minuten, insbesondere 2 bis 5 Minuten, betragen. Dies bedeutet, dass die Kontaktzeit des ersten Kieselgels mit dem Bier 0,5 bis 15 Minuten, vorzugsweise 1 bis 10 Minuten, insbesondere 2 bis 5 Minuten, betragen kann. Unabhängig davon kann die Kontaktzeit des zweiten Kieselgels mit dem Bier 0,5 bis 15 Minuten, vorzugsweise 1 bis 10 Minuten, insbesondere 2 bis 5 Minuten, betragen. Dieselben Kontaktzeiten, wie vorstehend genannt, gelten bevorzugt entsprechend für weitere Kieselgelzugaben zum Bier, falls welche vorgesehen sind. Zu weiteren Details zur Handhabung und Anwendung von Kieselgelen einschließlich des Durchlaufkontaktverfahrens, die auch in Zusammenhang mit dem erfindungsgemäßen Verfahren analog gelten, wird auf das Lehrbuch G. Annemüller, H.-J. Manger: "Klärung und Stabilisierung des Bieres", Kapitel 15.4, insbesondere 15.4.2, Verlag der VLB Berlin, 1. Auflage, 2011, Seiten 544 bis 557, verwiesen.

Beispiele für kommerziell verfügbare, erfindungsgemäß einsetzbare Xerogele sind: Stabifix Super, Stabiquick Strong, Becosorb 1000, Becosorb 2500, Britesorb D300, Britesorb BK390, PQ L10, Grace CP 536-10734.

Beispiele für kommerziell verfügbare, erfindungsgemäß einsetzbare Hydrogele sind: Stabifix W, Stabifix W MF, Becosorb 6000, Britesorb BK75, Britesorb BK85, Britesorb BK185.

Beispiele für kommerziell verfügbare, erfindungsgemäß einsetzbare hydratisierte Xerogele sind: Stabifix Extra, Britesorb BK200.

Die vorliegende Erfindung ist jedoch nicht auf die vorstehend genannten Kieselgele beschränkt, sondern kann auch andere Kieselgele betreffen, die sich zur Erfüllung des erfindungsgemäßen Zwecks eignen.

Beim erfindungsgemäßen Verfahren und bei der erfindungsgemäßen Verwendung kann vorgesehen sein, dass bei der Herstellung oder bei der Behandlung des Bieres weder einer seiner Vorstufen, insbesondere der Maische oder der Würze, noch dem Bier bis zum Ende der Hauptgärung, bis zum Ende der Reifung, oder bis zum Ende der Lagerung, ein Kieselgel zugegeben wird. In anderen Worten kann das erfindungsgemäße Verfahren bzw. die erfindungsgemäße Verwendung darauf beschränkt sein, dass alle Kieselgelzugaben, d.h., das erste Kieselgel und das zweite Kieselgel und ggf. weitere Kieselgele, nur einem/dem Bier zugegeben werden, das bereits aus dem Lagertank abgezogen, aber noch nicht in die Verkaufsgebinde abgefüllt wurde.

Ist beim erfindungsgemäßen Verfahren und/oder bei der erfindungsgemäßen Verwendung die Zugabe eines dritten Kieselgels zum Bier vorgesehen, so findet diese nach dem Abtrennen des zweiten Kieselgels aus dem Bier statt. Das dritte Kieselgel kann jedes Kieselgel sein, das erfindungsgemäß als Kieselgel verwendbar ist. Es kann identisch mit dem ersten und/oder zweiten Kieselgel oder ein anderes als das erste und zweite Kieselgel sein. Das dritte Kieselgel kann vorzugsweise ein Hydrogel, Xerogel, hydratisiertes Xerogel oder ein beliebiges Gemisch derselben sein. Das dritte Kieselgel wird dem Bier vorzugsweise in einer Dosage von 20 bis 65 g Trockenmasse Kieselgel/hl Bier, weiter bevorzugt 25 bis 55 g Trockenmasse Kieselgel/hl Bier, insbesondere 30 bis 50 g Trockenmasse Kieselgel/hl Bier, zugegeben. Die Kontaktzeit des dritten Kieselgels mit dem Bier ist vorzugsweise so, wie vorstehend allgemein definiert.

Ist beim erfindungsgemäßen Verfahren und/oder bei der erfindungsgemäßen Verwendung die Zugabe eines vierten Kieselgels zum Bier vorgesehen, so findet diese nach dem Abtrennen des dritten Kieselgels aus dem Bier statt. Das vierte Kieselgel kann jedes Kieselgel sein, das erfindungsgemäß als Kieselgel verwendbar ist. Es kann identisch mit dem ersten, zweiten und/oder dritten Kieselgel oder ein anderes als das erste und zweite und dritte Kieselgel sein. Das vierte Kieselgel kann vorzugsweise ein Hydrogel, Xerogel, hydratisiertes Xerogel oder ein beliebiges Gemisch derselben sein. Das vierte Kieselgel wird dem Bier vorzugsweise in einer Dosage von 20 bis 65 g Trockenmasse Kieselgel/hl Bier, weiter bevorzugt 25 bis 55 g Trockenmasse Kieselgel/hl Bier, insbesondere 30 bis 50 g Trockenmasse Kieselgel/hl Bier, zugegeben. Die Kontaktzeit des vierten Kieselgels mit dem Bier ist vorzugsweise so, wie vorstehend allgemein definiert.

### Ausführungsbeispiele

In verschiedenen Untersuchungen haben die Erfinder das erfindungsgemäße Verfahren und Abwandlungen davon an Vollbieren (original und alkoholfrei) getestet. Die Ergebnisse sind in der nachfolgenden Tab. 1 zusammengefasst.

Tabelle 1: Ein- oder zweistufige Glutenabtrennung aus zwei unfiltrierten, glutenhaltigen, untergärigen Bieren (Bier 1: Pils A (Vollbier), Bier 2: Pils A (alkoholfrei), Bier 3: Pils B (Vollbier)), Bier 4: Pils B (Vollbier, jedoch andere Charge/anderer Malzjahrgang als Bier 3) als Ausgangsbier, hergestellt aus 100 % Gerstenmalz, Glutengehalt der unfiltrierten Ausgangsbiere: 100 bis 120 mg/kg Glutengehalte, erste Kieselgel-Zugabe erfolgte zum unfiltrierten Ausgangsbier; * = erste Kieselgel-Zugabe erfolgte als Zugabe von Kieselsol (= flüssiges Kieselgel; ca. 30 % Trockenmasse) zum Unfiltrat im Lagertank; als erstes Kieselgel und zweites Kieselgel wurde jeweils dasselbe Xerogel (ca. 93 % Trockenmasse) eingesetzt, sofern nicht anders angegeben; Angabe aller Kieselgel-Zugaben in g Trockenmasse (TM)/hl Bier.

| Probe Nr. | Bier | erste Kieselgel-Zugabe [g TM/hl] | zweite Kieselgel-Zugabe [g TM /hl] | Glutengehalt im resultierenden Bier [mg/kg] |
|---|---|---|---|---|
| 1 | Bier 1 | 79 | 39 | 12 |
| 2 | Bier 1 | 79 | 39 | < 10 |
| 3 | Bier 1 | 79 | 79 | < 10 |
| 4 | Bier 1 | 79 | 79 | < 10 |
| 5 | Bier 1 | 39 | 79 | 24 |
| 6 | Bier 1 | 39 | 79 | 18 |
| 7 | Bier 1 | 39 | 79 + 8 g/hl Kieselsol | 19 |
| 8 | Bier 1 | 39 | 79 + 8 g/hl Kieselsol | 14 |
| 9 | Bier 2 | 70 | 0 | 43 |
| 10 | Bier 2 | 70 | 0 | 43 |
| 11 | Bier 2 | 15* | 70 | 43 |
| 12 | Bier 2 | 15* | 70 | 43 |
| 13 | Bier 2 | 11* | 70 | 26 |
| 14 | Bier 2 | 11* | 70 | 20 |
| 15 | Bier 3 | 37 | 0 | 32 |
| 16 | Bier 3 | 37 | 28 | 26 |
| 17 | Bier 3 | 37 | 65 | 13 |
| 18 | Bier 4 | 93 | 0 | 25 |

Wie der Tabelle 1 zu entnehmen ist, werden durch eine große Zugabemenge an Kieselgel (79 g TM/hl) bei der ersten Zugabe und eine mittlere Zugabemenge an Kieselgel (39 g/hl) bei der zweiten Zugabe sehr niedrige Glutengehalte im resultierenden Bier (12 mg/kg oder weniger) erzielt (vgl. Proben 1 und 2). Wird sowohl bei der ersten Zugabe als auch bei der zweiten Zugabe jeweils eine große Zugabemenge (79 g TM/hl) gewählt, so werden erwartungsgemäß ebenfalls sehr niedrige Glutengehalte im resultierenden Bier (< 10 mg/kg) erzielt (vgl. Proben 3 und 4). Allerdings führt die Zugabe einer großen Kieselgelmenge im Vergleich zu einer mittleren Kieselgelmenge bei der zweiten Zugabe zu keiner messbaren weiteren Verringerung des Glutengehalts im Bier, jedoch ist der Kieselgel-Verbrauch insgesamt erheblich höher.

Wird dagegen umgekehrt bei der ersten Zugabe eine mittlere Menge an Kieselgel (39 g/hl) und bei der zweiten Zugabe eine große Menge an Kieselgel (79 g TM/hl) dem Bier zugegeben, kann im resultierenden Bier keine hinreichende Absenkung des Glutengehalts erzielt werden (24 und 18 mg/kg; vgl. Proben 5 und 6). Eine geringfügige Verbesserung kann bei diesem Ansatz dadurch erzielt werden, dass bei der zweiten Zugabe dem Bier zusätzlich zum Kieselgel (79 g TM/hl) noch ein Kieselsol (flüssiges Kieselgel; 8 g TM/hl) zugegeben wird (vgl. Proben 7 und 8). Jedoch bleibt hier unklar, ob auf diesem Weg Glutengehalte von < 20 mg/kg reproduzierbar erreicht werden.

Wird bei einem alkoholfreien Bier (Bier 2) eine große Menge an Kieselgel (70 g/hl) dem Bier zugegeben, ohne dass eine zweite Zugabe erfolgt (einstufiger Kieselgel-Einsatz), wird im resultierenden Bier eine zu hohe Glutenkonzentration von 43 mg/kg erzielt (vgl. Proben 9 und 10).

Selbst wenn geringe bis mittlere Mengen (11 und 15 g TM/hl) in Form eines flüssigen Kieselgels (Kieselsols) dem Unfiltrat des Biers 2 als erste Zugabe bereits im Lagertank zugegeben wurden und nach dessen Abtrennung eine zweite Zugabe mit einer großen Kieselgelmenge (70 g TM/hl) erfolgte, war die Glutenkonzentration im resultierenden Bier nicht hinreichend niedrig (vgl. Proben 11 bis 14).

Wurde bei einem Vollbier (Bier 4) eine Menge an Kieselgel von 93 g TM/hl bei der ersten Gabe zudosiert und anschließend abgetrennt, ohne dass eine zweite Zugabe erfolgte, konnte der Glutengehalt lediglich auf etwa 25 mg/kg abgesenkt werden (vgl. Probe 18). Dies zeigt, dass eine einstufige Verringerung der Glutenkonzentration im Bier mittels Kieselgel durch eine einmalige Zugabe von Kieselgel trotz hoher Zugabemenge unzureichend sein kann, um ein glutenfreies Bier zu erzeugen. Dies ist bereits in Vorversuchen beobachtet worden, bei denen eine einmalige Kieselgel-Zugabe selbst in einer Dosage von über 100 g TM/hl nicht genügte, um den Glutengehalt des resultierenden Bieres verlässlich auf einen Wert von unter 20 mg/kg zu senken.

Bei einer anderen Charge der gleichen Vollbiersorte (Bier 3) wurde dann bei der ersten Zugabe eine mittlere Menge an Kieselgel (37 g TM/hl) und bei der zweiten Zugabe keine, eine mittlere und eine große Menge an Kieselgel (0, 28, 65 g TM/hl) dem Bier zugegeben (vgl. Proben 15 bis 17). Hierbei konnte festgestellt werden, dass eine mittlere Menge an Kieselgel bei der ersten Stufe selbst dann nicht ausreichend im Sinne einer Glutenverringerung ist, wenn in der zweiten Stufe auch eine mittlere Menge an Kieselgel zugegeben wird. Allenfalls die Zugabe einer großen Menge an Kieselgel in der zweiten Stufe könnte eine hinreichende Verringerung des Glutengehalts bedeuten (vgl. Probe 17).

In einem weiteren Versuchsansatz wurde untersucht, wie weit das erfindungsgemäße Verfahren auch für den Einsatz im großtechnischen Maßstab geeignet ist. Hierbei sollte insbesondere getestet werden, ob es bei einem höheren Bierdurchsatz zu den in den Vorversuchen beobachteten Rücklöseeffekten von Gluten kommt. Dazu wurde einem unfiltrierten Vollbier der Sorte Pils mit einem Glutengehalt von ca. 120 mg/kg als Ausgangsbier eine erste Kieselgel-Zugabe von 75 g TM/hl zugegeben und mittels eines Separators geklärt. Anschließend wurde dem resultierenden Bier 65 g TM/hl Kieselgel in einer zweiten Kieselgel-Zugabe zugeführt und dieses mittels einer Kieselgurfiltration wieder entfernt. Die Meßergebnisse sind in der nachfolgenden Tabelle 2 zusammengefasst.

Tabelle 2: Zweistufige Glutenabtrennung aus einem unfiltrierten, glutenhaltigen, untergärigen Bier, Glutengehalt des unfiltrierten, glutenhaltigen, untergärigen Ausgangsbiers (Vollbier (Pils) aus 100 % Gerstenmalz): 110 bis 130 mg/kg, erste Kieselgel-Zugabe (Xerogel, ca. 93 % Trockenmasse) von 75 g Trockenmasse (TM)/hl erfolgte zum unfiltrierten Ausgangsbier; dann Klärung mittels Separator (Probenahme nach Bierdurchsatz von 1.000 hl ergab Proben A1 bis A4); anschließend erfolgte zweite Kieselgel-Zugabe (dasselbe Xerogel wie bei der ersten Zugabe) von 65 g Trockenmasse (TM)/hl; dann Abtrennung mittels Kieselgurfiltration (Probenahme nach Bierdurchsatz von 250 hl ergab Proben B1 und B2; Probenahme nach Bierdurchsatz von 500 hl ergab Proben C1 und C2; Probenahme nach Bierdurchsatz von 750 hl ergab Proben D1 und D2; * = Messung des Glutengehalts mittels R5-Competitive-ELISA gemäß AOECS-Standards vom September 2016 durch ein akkreditiertes Analyselabor 1; ** = Messung des Glutengehalts mittels R5-Competitive-ELISA gemäß AOECS-Standards vom September 2016 durch ein ackreditiertes Analyselabor 2)

| Probe Nr. | Beschreibung der Behandlungsstufe des Bieres | Kieselgel-Zugabe [g TM/hl] | Probenahmezeitpunkt (Bierdurchsatz) [hl] | Glutengehalt im Bier [mg/kg] |
|---|---|---|---|---|
| A1* | nach erster Kieselgel-Zugabe (75 g TM/hl) und Abtrennung mittels Separator | 75 | 1.000 | 19,1 |
| A2** | nach erster Kieselgel-Zugabe (75 g TM/hl) und Abtrennung mittels Separator | 75 | 1.000 | 25,4 |
| A3* | nach erster Kieselgel-Zugabe (75 g TM/hl) und Abtrennung mittels Separator | 75 | 1.000 | 16,4 |
| A4** | nach erster Kieselgel-Zugabe (75 g TM/hl) und Abtrennung mittels Separator | 75 | 1.000 | 25,6 |
| B1* | nach zweiter Kieselgel-Zugabe (65 g TM/hl) und Abtrennung mittels Kieselgurfiltration | 65 | 250 | < 10 |
| B2** | nach zweiter Kieselgel-Zugabe (65 g TM/hl) und Abtrennung mittels Kieselgurfiltration | 65 | 250 | < 10 |
| C1* | nach zweiter Kieselgel-Zugabe (65 g TM/hl) und Abtrennung mittels Kieselgurfiltration | 65 | 500 | < 10 |
| C2** | nach zweiter Kieselgel-Zugabe (65 g TM/hl) und Abtrennung mittels Kieselgurfiltration | 65 | 500 | < 10 |
| D1* | ⁿach zweiter Kieselgel-Zugabe (65 g TM/hl) und Abtrennung mittels Kieselgurfiltration | 65 | 750 | < 10 |
| D2** | nach zweiter Kieselgel-Zugabe (65 g TM/hl) und Abtrennung mittels Kieselgurfiltration | 65 | 750 | < 10 |

Wie der Tabelle 2 zu entnehmen ist, wird durch die erste Kieselgel-Zugabe eine Verringerung des Glutengehalts im Bier von etwa 120 mg/kg auf etwa 20 bis 25 mg/kg erzielt, selbst nach einem Bierdurchsatz von 1.000 hl.

Nach der zweiten Kieselgel-Zugabe und dessen Abtrennung ist im resultierenden Bier auch nach einem Bierdurchsatz von 250, 500 und 750 hl kein Gluten mehr nachweisbar (vgl. Proben B1 bis D2). Dies zeigt, dass sich mit dem erfindungsgemäßen Verfahren glutenfreie Biere aus glutenhaltigen Ausgangsbieren auch bei hohen Bierdurchsätzen mit ausreichend geringen bis nicht nachweisbare Glutenkonzentrationen reproduzierbar und stabil erzeugen lassen.

Bei keinem der in den vorstehenden Versuchen erfindungsgemäß behandelten oder erfindungsgemäß hergestellten, glutenfreien Bieren wurde eine geschmackliche oder geruchliche Beeinträchtigung gegenüber dem entsprechenden, glutenhaltigen Ausgangsbier festgestellt. Die erfindungsgemäß erzeugten glutenfreien Biere waren von den glutenhaltigen Ausgangsbieren sensorisch nicht unterscheidbar.

## Patentansprüche

1. Verfahren zum Behandeln eines Bieres, wenigstens aufweisend die Schritte:
(a) Zugeben eines ersten Kieselgels zum Bier in einer Dosage von 55 bis 95 g Trockenmasse Kieselgel/hl Bier, wobei das Bier einen Gehalt an Gluten von wenigstens 80 mg/kg aufweist;
(b) Abtrennen des ersten Kieselgels aus dem Bier;
(c) nach dem Abtrennen des ersten Kieselgels aus dem Bier, Zugeben eines zweiten Kieselgels zum Bier in einer Dosage von 20 bis 65 g Trockenmasse Kieselgel/hl Bier, vorzugsweise 25 bis 55 g/hl Bier, insbesondere 30 bis 50 g/hl Bier; und
(d) Abtrennen des zweiten Kieselgels aus dem Bier.

2. Verfahren nach Anspruch 1, wobei das erste Kieselgel ein Xerogel oder ein Hydrogel ist; und/oder
wobei das zweite Kieselgel ein Xerogel oder ein Hydrogel ist; und/oder wobei das erste Kieselgel und das zweite Kieselgel dasselbe Kieselgel sind.

3. Verfahren nach Anspruch 1 oder 2, wobei das Abtrennen des ersten Kieselgels in Schritt (b) und/oder das Abtrennen des zweiten Kieselgels in Schritt (d) mittels eines Separators oder einer Zentrifuge, vorzugsweise mittels eines Feinstklärers, oder mittels Filtration erfolgt.

4. Verfahren nach einem der Ansprüche 1 bis 3, wobei dem Bier vor dem Abtrennen des ersten Kieselgels aus dem Bier in Schritt (b), vorzugsweise beim Zugeben des ersten Kieselgels zum Bier in Schritt (a), ein Filterhilfsmittel, vorzugsweise Kieselgur oder Perlit, zugegeben wird; und
wobei das Filterhilfsmittel vor dem Zugeben des zweiten Kieselgels zum Bier in Schritt (c) aus dem Bier abgetrennt wird.

5. Verfahren nach einem der Ansprüche 1 bis 4, wobei dem Bier nach dem Abtrennen des ersten Kieselgels aus dem Bier in Schritt (b), vorzugsweise beim Zugeben des zweiten Kieselgels zum Bier in Schritt (c), ein Stabilisierungsmittel, vorzugsweise PVPP oder Bentonit, zugegeben wird; und
wobei das Stabilisierungsmittel vorzugsweise beim Abtrennen des zweiten Kieselgels in Schritt (d) aus dem Bier abgetrennt wird.

6. Verfahren nach einem der Ansprüche 1 bis 5, wobei bei der Herstellung des Bieres weder dem Bier noch einer seiner Vorstufen, insbesondere der Maische oder der Würze, ein Enzym zugegeben wird, mit Ausnahme der in den zur Herstellung des Bieres verwendeten Rohstoffen natürlich enthaltenen Enzyme.

7. Verfahren nach einem der Ansprüche 1 bis 6, wobei das Bier ausschließlich aus den Rohstoffen Malz, vorzugsweise Gerstenmalz, Wasser und Hopfen, und unter Verwendung von Hefe hergestellt werden worden ist;
wobei Hopfen Doldenhopfen, Hopfenpellets, Hopfenextrakte und sonstige, nach dem Deutschen Reinheitsgebot zugelassene Hopfenprodukte einschließt.

8. Verfahren zum Herstellen eines glutenfreien Bieres, wenigstens aufweisend die Schritte:
(aa) Herstellen eines Bieres unter Verwendung eines glutenhaltigen Rohstoffs, vorzugsweise eines Gerstenmalzes, wobei das Bier einen Gehalt an Gluten von wenigstens 80 mg/kg, vorzugsweise wenigstens 100 mg/kg, aufweist; und
(bb) Behandeln des Bieres nach dem Verfahren nach einem der Ansprüche 1 bis 7.

9. Bier, behandelt oder hergestellt nach dem Verfahren nach einem der Ansprüche 1 bis 8,
wobei das Bier einen Gehalt an Gluten von < 20 mg/kg aufweist.

10. Verwendung von Kieselgel zum Einstellen des Glutengehalts eines Bieres auf < 20 mg/kg,
wobei Kieselgel in wenigstens zwei nacheinander erfolgenden Stufen verwendet wird,
wobei in jeder Stufe dem Bier Kieselgel zugegeben und aus dem Bier abgetrennt wird.

11. Verwendung nach Anspruch 10, wobei ein erstes Kieselgel dem glutenhaltigen Bier in einer Dosage von 55 bis 95 g Trockenmasse Kieselgel/hl Bier zugegeben wird, wobei danach das erste Kieselgel aus dem Bier abgetrennt wird,
wobei danach ein zweites Kieselgel dem Bier in einer Dosage von 20 bis 65 g Trockenmasse Kieselgel/hl Bier zugegeben wird,
wobei danach das zweite Kieselgel aus dem Bier abgetrennt wird.
